# EUROPÄISCHE PATENTSCHRIFT

(11) **EP 3 256 347 B1**
(45) Veröffentlichungstag und Bekanntmachung des Hinweises auf die Patenterteilung: **26.08.2020**
(21) Anmeldenummer: 16706147.2
(22) Anmeldetag: 09.02.2016
(51) Int. Cl.: B60R 16/03, H02J 1/14

(54) **VERFAHREN ZUR STEUERUNG EINES VERBRAUCHERS EINES NIEDERVOLTBORDNETZES**
METHOD FOR CONTROLLING A LOAD OF A LOW-VOLTAGE VEHICLE ELECTRICAL SYSTEM
PROCÉDÉ DE COMMANDE D'UN RÉCEPTEUR D'UN RÉSEAU DE BORD BASSE TENSION

(30) Priorität: 11.02.2015 DE 102015202453
(43) Veröffentlichungstag der Anmeldung: 20.12.2017
(73) Patentinhaber: Volkswagen Aktiengesellschaft, 38436 Wolfsburg (DE)
(72) Erfinder: BÜHRING, Kai, 38448 Wolfsburg (DE)
(74) Vertreter: MFG Patentanwälte Meyer-Wildhagen Meggle-Freund Gerhard PartG mbB
(86) Internationale Anmeldenummer: PCT/EP2016/052683
(87) Internationale Veröffentlichungsnummer: WO 2016/128375

(56) Entgegenhaltungen:
- EP-A1- 0 601 300
- EP-A1- 1 405 767
- EP-A1- 1 564 863
- EP-A1- 1 626 322
- EP-A1- 2 579 412
- WO-A1-03/016097
- WO-A1-2007/141069
- WO-A2-2014/133859
- DE-A1- 10 162 522
- DE-A1- 10 252 292
- DE-A1- 10 336 815
- DE-A1- 19 857 916

## Beschreibung

Die Erfindung betrifft ein Bordnetz eines Kraftfahrzeugs, ein Kraftfahrzeug mit einem solchen Bordnetz und ein Verfahren zum Schalten eines Trennelements eines Bordnetzes.

Ein Bordnetz eines Fahrzeugs enthält üblicherweise eine Reihe von Bordnetzverbrauchern, einen Starter, einen elektrischen Energiespeicher zum Versorgen der Bordnetzverbraucher und des Starters mit Energie und Trennschalter. Mit Hilfe der Trennschalter können die Bordnetzverbraucher bei einem Start eines Motors eines Fahrzeugs von dem Energiespeicher getrennt werden, um den Starter mit ausreichend Energie zu versorgen.

In herkömmlichen Bordnetzen können zudem dynamische Verbraucher enthalten sein, deren Betrieb zu Spannungsschwankungen im Bordnetz führen kann. Dadurch kann der Betrieb von Bordnetzverbrauchern, die gegenüber Spannungsschwankungen sensibel sind, gefährdet werden. Diese Spannungsschwankungen werden bisher durch den Einsatz einer Vielzahl an komplexen Bauteilen wie Gleichspannungswandlern (DC/DC-Wandler) und regelbaren Q-Dioden vermieden.

In ungünstigen Betriebsfällen werden die Leistungsgrenzen des DC/DC-Spannungswandlers durch eine zu hohe Niedervolt-Bordnetzlast überschritten. Resultierend daraus wird Energie aus der Niedervoltbatterie entnommen, was in einer höheren Belastung durch stärkere Zyklisierung mündet. Im ungünstigsten Fall, z.B. wenn die Batterie entladen ist oder die Batterieklemme nicht verbunden ist, kann ein Bordnetzausfall in Folge von Unterspannung auftreten.

Gemäß der europäischen Patentanmeldung EP 0 601 300 A1 werden in der Steuereinrichtung des Fahrzeugs verschiedene Fahrzustände definiert, denen jeweils vorgegebene Typen von elektrischen Verbrauchern zugeordnet sind. Auf der Basis der von Sensoren gelieferten Signale kann dann je nach Fahrzustand bestimmt werden, welche Typen von Verbrauchern einzeln oder gruppenweise, gleichzeitig oder nacheinander entsprechend einer vorgegebenen Reihenfolge, ab- oder rückgeschaltet werden sollen. Zur Entlastung des elektrischen Bordnetzes werden sowohl bei unterschiedlichen Belastungszuständen der Brennkraftmaschine als auch bei deren An- oder Abschaltung für die elektrischen Verbraucher eine Ab- oder Rückschalthierarchie festgelegt wird, die einerseits ein Optimum an Energieeinsparung und andererseits eine vollständige Aufrechterhaltung der Betriebs- und Fahrsicherheit des Fahrzeugs ermöglicht.

Die europäische Patentanmeldung EP 1 626 322 A1 offenbart ein Verfahren zum Verwalten des Energiebedarfs elektrischer Verbraucher in einem elektrischen Netz. Ein wesentlicher Aspekt besteht darin, neben dem elektrischen Netz ein Kommunikationsnetz vorzusehen, an dem die elektrischen Verbraucher bzw. ihnen zugeordnete Kommunikationseinheiten und eine Verwaltungseinrichtung angeschlossen sind. In diesem Netzwerk senden die elektrischen Verbraucher, noch bevor sie tatsächlich zugeschaltet oder hochgeregelt werden, eine Leistungs-Spezifikations-Nachricht und eine Prioritätsinformation an die zentrale Verwaltungseinrichtung. Die Verwaltungseinheit ordnet dem Verbraucher in Abhängigkeit von der Auslastung des elektrischen Netzes und der Priorität des Verbrauchers dann eine bestimmte Energiemenge zu und erfüllt die Leistungsanforderung des elektrischen Verbrauchers entweder ganz, teilweise oder gar nicht.

Die deutsche Offenlegungsschrift die DE 198 57916 A1 offenbart ein Verfahren und eine Vorrichtung zur Steuerung von elektrischen Verbrauchern in einem Fahrzeug vorgeschlagen, wobei eine Steuerungsstruktur für die Verbraucher vorgesehen ist, die aus wenigstens einem übergeordneten Verbrauchermanagement besteht, der von den Verbrauchern einzeln oder als Summen zusammengefasst Anforderungen bezüglich der Verbraucherleistung empfängt.

Die deutsche Offenlegungsschrift DE 101 62522 A1 offenbart ein Stromversorgungsgerät für ein Fahrzeug, das einen Stromzuführabschnitt mit einem Stromspeicherabschnitt und mit einem Stromerzeugungsabschnitt umfasst.

Die deutsche Offenlegungsschrift DE 102 52292 A1 offenbart ein Verfahren zur Steuerung der Energieverteilung in einem Verkehrsmittel.

Die europäische Patentanmeldung EP 2 579 412 A1 offenbart ein System und Verfahren zur automatischen Verwaltung der Stromversorgung für Luftfahrtanwendungen
Aufgabe der vorliegenden Erfindung ist es, ein verbessertes Verfahren zur Steuerung eines Verbrauchers eines Niedervolt-Kraftfahrzeugbordnetzes und eine entsprechend eingerichtete Steuerungsvorrichtung bereitzustellen.

Diese Aufgabe wird durch das erfindungsgemäße Verfahren nach Anspruch 1 und die Vorrichtung nach Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Im Folgenden werden Ausführungsbeispiele eines Verfahrens zur Steuerung eines Verbrauchers eines Niedervoltbordnetzes eines Kraftfahrzeugs beschrieben, bei dem, wenn ein Zuschalten eines Hochstromverbrauchers erkannt wird, der Stromverbrauch eines anderen Verbrauchers um einen Betrag zurückgenommen wird, der dem Stromverbrauch des Hochstromverbrauchers entspricht.

Das Verfahren kann in einem beliebigen Kraftfahrzeug eingesetzt werden, vorzugsweise jedoch in einem Hybridfahrzeug, bei dem ein Niedervoltbordnetz von einem Hochvoltbordnetz über einen Gleichspannungswandler gespeist wird.

Das Verfahren kann als Steuersoftware implementiert sein, beispielsweise in einem Energiemanager des Kraftfahrzeugs.

Bei dem Stromverbraucher, dessen Stromverbrauch zurückgenommen wird, kann es sich um einen beliebigen Verbraucher eines Niedervolt-Kraftfahrzeugbordnetzes handeln. Vorteilhafterweise handelt es sich jedoch um einen Verbraucher mit einem ausreichend hohen Stromverbrauch, so dass eine Zurücknahme des Stromverbrauchs des Verbrauchers zu einer nicht unwesentlichen Reduzierung der Gesamtbelastung des Niedervoltbordnetzes führt.

Besonders vorteilhaft ist es, wenn es sich bei dem Verbraucher, dessen Stromwert zurückgenommen wird, um einen Verbraucher handelt, dessen Wirkung mit Trägheit auf ein Zurücknehmen des Stromwertes reagiert. Damit ist gewährleistet, dass beispielsweise ein sofortiges Abschalten des Verbrauchers nicht unmittelbar zu einer kritischen Beeinträchtigung der Funktionsfähigkeit des gesamten Kraftfahrzeugs führt.

Bei dem Verbraucher, dessen Stromwert zurückgenommen wird, kann es sich beispielsweise um den Kühlerlüfter handeln, denn das Kühlungssystem weist eine gewisse Trägheit auf. Wird der Kühlerlüfter spontan abgeschaltet, führt dies nicht unmittelbar zu einer Überhitzung des Motors. Vielmehr steigt die Temperatur des Kühlungssystems nach Abschalten des Kühlerlüfters nur langsam an.

Besonders vorteilhaft ist es, wenn der Verbraucher, dessen Stromwert zurückgenommen wird, eine Induktivität aufweist, so dass bei Zurücknehmen des Stromwertes des Verbrauchers eine Induktionsspannung generiert wird, welche das Niedervoltbordnetz zusätzlich speist. Dies hat den Vorteil, dass durch Herunterfahren des Verbrauchers nicht nur die Stromentnahme des Verbrauchers reduziert wird, sondern dem Niedervoltbordnetz in Momenten von Stromentnahmespitzen sogar zusätzliche Leistung zugeführt werden kann.

Bei dem Hochstromverbraucher kann es sich um einen beliebigen Verbraucher eines Niedervolt-Kraftfahrzeugbordnetzes handeln. Der Begriff Hochstromverbraucher ist hier so zu verstehen, dass der Stromverbrauch des Hochstromverbrauchers für die Belastung des Bordnetzes nicht unwesentlich ist, d.h. z.B. in kritischen Betriebszuständen ein Hinzuschalten des Hochstromverbrauchers etwaige ungünstige Auswirkungen auf die Betriebssituation wie beispielsweise einen Zusammenbruch der Niedervoltspannung oder einen Ausfall eines das Niedervoltnetz speisenden Gleichspannungswandlers mit sich bringen könnte.

Vorzugsweise handelt es sich bei dem Hochstromverbraucher um einen Verbraucher, der nur kurzzeitig zugeschaltet wird. Dies hat den Vorteil, dass durch Hinzuschalten des Hochstromverbrauchers nur kurzfristige Stromspitzen entstehen, die durch zeitlich beschränktes Abschalten eines anderen Verbrauchers vorübergehend kompensiert werden können.

Bei dem Hochstromverbraucher kann es sich beispielsweise um eine Getriebepumpe (bzw. eine Ölpumpe) handeln, die für den normalen Schaltbetrieb und/oder zur Kühlung verwendet wird. Eine solche Getriebepumpe wird in bestimmten Betriebszuständen lediglich kurzfristig aktiviert, so dass eine durch Aktivierung der Getriebepumpe bewirkte Stromspitze durch ein zeitlich beschränktes Abschalten eines anderen Verbrauchers, wie beispielsweise einem Kühlerlüfter, vorübergehend kompensiert werden kann.

Die vorliegende Erfindung ermöglicht es demnach, verschiedene Verbraucher miteinander zu betrachten, mithin verschiedene Verbraucher zu "verschränken" bzw. zu verschalten. Beispielsweise wird der Kühlerlüfter mit hoher Leistung unter bestimmten Bedingungen gegen die hohe Leistung der Getriebepumpe "verschränkt" bzw. verschaltet. Im Moment des Einschaltens der Getriebepumpe wird für kurze Zeit der Kühlerlüfter auf den minimalsten Volumenstrom reduziert. Hierbei wird die Trägheit des Kühlungssystems ausgenutzt. Hat die Getriebepumpe den erforderlichen Druck aufgebaut, kann der Kühlerlüfter sofort wieder hochdrehen.

Bei dem Verfahren wird vorteilhafter Weise ein Steuersignal ausgewertet, welches eine kritische Belastung des Niedervoltnetzes anzeigt und wobei der Stromverbrauch des anderen Verbrauchers zurückgenommen wird, falls das Steuersignal eine kritische Belastung des Niedervoltnetzes anzeigt. Insbesondere kann das Steuersignal anzeigen, dass viele Verbraucher Energie benötigen. Das Steuersignal kann beispielsweise auch erzeugt werden, wenn zu viel Energie aus einer Niedervoltbatterie entnommen wird, insbesondere wenn die Batterie nicht mehr genug Energie enthält, um eine stabile Versorgung des Niedervoltbordnetzes zu gewährleisten. Alternativ kann das Steuersignal auch erzeugt werden, wenn eine Stromentnahme aus einem Hochvoltbordnetz einen kritischen Wert überschreitet. In die Erzeugung des Steuersignals kann beispielsweise auch einfließen, ob der Verbrennungsmotor unter Volllast (z.B. Bergauf, viel Gewicht u./o. Anhänger) betrieben wird.

Das Steuersignal kann auch auf Basis einer Kombination der genannten Faktoren bestimmt werden. Das Steuersignal kann beispielsweise von einer Energiemanagement-Einheit des Kraftfahrzeugs, von einem Batteriemanager oder von einer Leistungselektronik erzeugt werden.

Ferner kann bei dem Verfahren ein Steuersignal ausgewertet werden, welches über die Zuschaltung des Hochstromverbrauchers informiert. Bei dem Steuersignal kann es sich beispielsweise um ein Signal der Motorsteuerung handeln, das einen Verbraucher wie eine Getriebepumpe aktiviert. Das Steuerverfahren der vorliegenden Erfindung kann beispielsweise den Signalfluss einer Motorsteuerung auf das Auftreten des Steuersignals überwachen. Dies hat den Vorteil, dass für die Implementierung des erfindungsgemäßen Verfahrens kein wesentlicher Eingriff in die Motorsteuerung erfolgen muss.

Nach Erkennen des Steuersignals, welches über die Zuschaltung des Hochstromverbrauchers informiert, wird vorteilhafter Weise der Stromverbrauch des anderen Verbrauchers maximal zurückgenommen. Liegt beispielsweise der Leistungsverbrauch einer Getriebepumpe bei maximaler Belastung bei 500 W und der Leistungsverbrauch eines Kühlerlüfters bei 600 W, so kann durch komplettes Zurückfahren des Stromverbrauchs des Kühlerlüfters eine von der Getriebepumpe erzeugte Belastungsspitze kurzfristig kompensiert werden.

Alternativ wird nach Erkennen des Steuersignals, welches über die Zuschaltung des Hochstromverbrauchers informiert, der Stromverbrauch des anderen Verbrauchers um einen Betrag zurückgenommen, der im Wesentlichen dem Stromverbrauch des Hochstromverbrauchers entspricht. Dazu können im Energiemanagement des Kraftfahrzeugs typische Leistungswerte der Verbraucher hinterlegt werden. Handelt es sich bei dem zurückzunehmenden Verbraucher beispielsweise um einen PWM-Kühlerlüfter, so kann dieser per Pulsweitenmodulation differenziert angesteuert werden, so dass der Stromverbrauch eingestellt werden kann. Dies hat den Vorteil, dass die Summe der Leistung nahezu konstant bleibt, bzw. bei induktiven Verbrauchern sogar geringer werden kann.

Die vorliegende Erfindung betrifft auch eine Steuerungsvorrichtung für ein Kraftfahrzeug, die dazu ausgelegt ist, die oben beschriebenen Verfahren auszuführen. Bei der Steuerungsvorrichtung kann es sich beispielsweise um ein Energiemanagement-System eines Kraftfahrzeugs handeln. Die Steuerungsvorrichtung kann als ein Prozessor ausgeführt sein, auf dem Software ausgeführt wird, welche die oben beschriebenen Verfahren ausführt.

Ausführungsbeispiele der Erfindung werden nun beispielhaft und unter Bezugnahme auf die beigefügten Zeichnungen beschrieben, wobei:
Fig. 1 schematisch ein Ausführungsbeispiel des Verfahrens zur Steuerung von Verbrauchern eines Niedervoltbordnetzes eines Kraftfahrzeugs zeigt; und
Fig. 2 schematisch eine Steuervorrichtung zur Steuerung von Verbrauchern eines Niedervoltbordnetzes eines Kraftfahrzeugs zeigt.

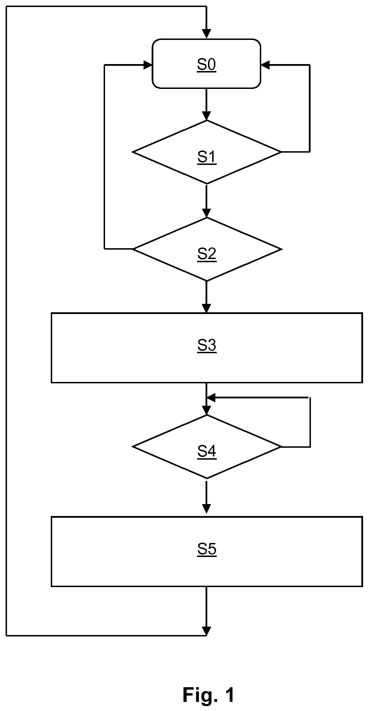

Bezugnehmend auf das Steuerungsverfahren der Fig. 1:
Das Verfahren startet in Schritt S0.

In Schritt S1 wird ein Steuersignal ausgewertet, welches das Hinzuschalten einer Getriebepumpe (500 W Maximalverbrauch) anzeigt. Wird kein Hinzuschalten einer Getriebepumpe erkannt, so kehrt das Verfahren zum Start S0 zurück. Wird ein Hinzuschalten einer Getriebepumpe erkannt, so fährt das Verfahren mit Schritt S2 fort.

In Schritt S2 wird ein Steuersignal ausgewertet, welches eine kritische Belastung des Niedervoltnetzes anzeigt. Bei dem Steuersignal handelt es sich um ein vom Energiemanagement des Kraftfahrzeugs erzeugtes binäres Signal, welches anzeigt, dass eine kritische Belastung vorliegt, oder, alternativ, dass keine kritische Belastung vorliegt.
Liegt keine kritische Belastung des Niedervoltnetzes vor, so kehrt das Verfahren zum Start S0 zurück. Für den Fall des Einschaltens der Getriebepumpe kann es vorkommen, dass der DC/DC Wandler (2,5kW Maximalleistung) nicht genug Energie bereitstellt oder allg. nicht genug Energie vorhanden ist. Liegt solch eine kritische Belastung des Niedervoltnetzes vor, so fährt das Verfahren mit Schritt S3 fort.

In Schritt S3 wird der Stromverbrauch eines Kühlerlüfters zurückgenommen. Hier wird insbesondere der elektrische PWM (PulsWeitenModulierte) Kühlerlüfter (600W Maximalverbrauch) sehr schnell von 100% auf 0 heruntergetaktet oder auf minimalsten Volumenstrom reduziert, indem ein entsprechendes Steuersignal an den Kühlerlüfter gesendet wird. Es erfolgt damit ein sehr schnelles Abschalten des Kühlerlüfters. Da das Kühlersystem mit Trägheit auf ein Abschalten des Kühlerlüfters reagiert, nimmt die Kühlertemperatur nach Abschalten des Kühlerlüfters nicht sprunghaft, sondern nur langsam zu. Vorteilhaft ist, dass dadurch auch noch eine Induktionsspannung aufgebaut wird, die zusätzlich Energie bereit stellt. Dadurch werden Spannungsspitzen vermieden, die sich ansonsten störend auswirken.

In Schritt S4 wird das Steuersignal, welches das Hinzuschalten einer Getriebepumpe anzeigt, daraufhin überprüft, ob die Getriebepumpe noch Strom benötigt, oder nicht. Hat die Getriebepumpe den erforderlichen Druck aufgebaut, so wird sie von der Motorsteuerung wieder deaktiviert, so dass sie keine elektrische Leistung mehr verbraucht. Schritt S4 wird so lange ausgeführt, bis erkannt wird, dass das Hinzuschalten der Getriebepumpe beendet ist. Wird erkannt wird, dass das Hinzuschalten der Getriebepumpe beendet ist, dann fährt das Verfahren mit Schritt S5 fort.

In Schritt S5 wird der Kühlerlüfter wieder in seinen vorigen Betriebszustand (100%) hochgefahren, indem ein entsprechendes Steuersignal an den Kühlerlüfter gesendet.

Das Verfahren kehrt schließlich zum Start S0 zurück.

In diesem Ausführungsbeispiel wird der Kühlerlüfter mit hoher Leistung unter bestimmten Bedingungen gegen die hohe Leistung der Getriebepumpe "verschränkt" bzw. verschaltet. Im Moment des Einschaltens der Getriebepumpe wird für kurze Zeit der Kühlerlüfter auf minimalsten Volumenstrom reduziert.

Das Verfahren kann auf diese Weise in einem Energiemanagement-System ständig ausgeführt werden, um das Auftreten von Stromspitzen zu überwachen und durch entsprechendes Abschalten anderer Komponenten solche Stromspitzen zu kompensieren, bevor sie sich ausbilden können. Dadurch kann eine Überlastung des Niedervoltbordnetzes verhindert werden.

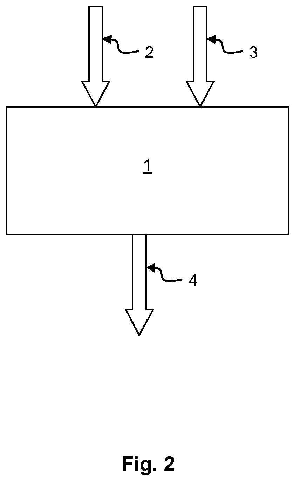

Bezugnehmend auf die Steuervorrichtung der Fig. 2:
Das Energiemanagement-System 1 weist eine Schnittstelle auf, um Steuersignale 2 entgegenzunehmen, auf deren Basis ermittelt wird, ob eine kritische Belastung des Niedervoltnetzes vorliegt. Bei diesen Steuersignalen 2 kann es sich beispielsweise um Parameter einer Niedervoltbatterie handeln, welche das Energiemanagement-System 1 von einem Batteriemanager der Niedervoltbatterie erhält. Bei diesen Steuersignalen 2 kann es sich ferner um Sensordaten handeln, aus welchen das Energiemanagement-System den aktuellen Stromverbrauch verschiedenster Komponenten des Bordnetzes ermitteln kann. Bei diesen Steuersignalen 2 kann es sich ferner um die Ausgabe einer Leistungselektronik handeln, welche das Energiemanagement-System 1 beispielsweise über den Betriebszustand eines Gleichspannungswandlers informiert.

Das Energiemanagement-System 1 weist ferner eine Schnittstelle auf, um ein Steuersignal 3 entgegenzunehmen, welches über die Zuschaltung eines Hochstromverbrauchers, insbesondere einer Getriebepumpe informiert. Das Energiemanagement-System 1 kann solch ein Steuersignal 3 beispielsweise direkt von der jeweiligen Komponenten erhalten, oder aber auch von einer Motorsteuerung. Das Energiemanagement-System 1 könnte auch mehrere solche Steuersignale 3 betreffend unterschiedliche Hochstromverbraucher entgegennehmen.

Das Energiemanagement-System 1 weist ferner eine Schnittstelle auf, um ein Steuersignal 4 auszugeben, welches den Leistungsverbrauch bzw. Stromverbrauch einer Komponente, hier insbesondere eines Kühlerlüfters steuert. Im Falle des Kühlerlüfters kann es sich beispielsweise um ein PWM-Signal handeln, mit dem die Frequenz des Kühlerlüfters gesteuert wird. Das Energiemanagement-System 1 könnte auch mehrere solche Steuersignale 4 betreffend unterschiedliche Komponenten entgegennehmen.

Die genannten Schnittstellen können beispielsweise ein Fahrzeugdatenbussystem und entsprechende Übertragungselektronik umfassen.

Soweit im vorstehenden auf ein Energiemanagement-System und eine Motorsteuerung abgestellt wurde, wird der Fachmann erkennen, dass die Funktionalität dieser Steuerungen in einem Prozessor realisiert werden kann und als Software implementiert werden kann. Die Funktionalität muss nicht notwendiger Weise auf zwei getrennte Hardware-Einheiten separiert sein. Vielmehr kann die Funktionalität auch in einem zentralen Fahrzeugprozessor realisiert werden, oder auch als verteiltes System, das über mehrere Komponenten verteilt ist.

Ferner wird der Fachmann erkennen, dass die in den Ausführungsbeispielen angegebene Reihenfolge von Schritten nicht zwingend ist. So können beispielsweise in dem Ausführungsbeispiel der Fig. 1 die Schritte S1 und S2 auch vertauscht werden.

### Bezugszeichenliste

- 1: Energiemanagement-System
- 2: Steuersignale zur Ermittlung einer kritischen Belastung des Niedervoltnetzes
- 3: Steuersignal welches über die Zuschaltung eines Hochstromverbrauchers informiert
- 4: Steuersignal welches den Leistungsverbrauch einer Komponente steuert
- S0: Start
- S1: Erkennen des Hinzuschaltens einer Getriebepumpe
- S2: Überprüfen auf eine kritische Belastung des Niedervoltnetzes
- S3: Zurücknehmen des Stromverbrauchs eines Kühlerlüfters
- S4: Überprüfen, ob das Hinzuschalten der Getriebepumpe beendet ist
- S5: Hochfahren des Kühlerlüfters

## Patentansprüche

1. Verfahren zur Steuerung eines Verbrauchers eines Niedervoltbordnetzes eines Kraftfahrzeugs, bei dem, wenn ein Zuschalten eines Hochstromverbrauchers erkannt wird (S1), der Stromverbrauch eines Kühlerlüfters um einen Betrag zurückgenommen wird (S3), der dem Stromverbrauch des Hochstromverbrauchers entspricht.

2. Verfahren nach Anspruch 1, wobei es sich bei dem Verbraucher, dessen Stromwert zurückgenommen wird, um einen PWM-Kühlerlüfter handelt, der per Pulsweitenmodulation differenziert angesteuert wird, so dass der Stromverbrauch eingestellt werden kann.

3. Verfahren nach einem der vorstehenden Ansprüche, wobei es sich bei dem Verbraucher, dessen Stromwert zurückgenommen wird, um einen Verbraucher handelt dessen Wirkung mit Trägheit auf ein Zurücknehmen des Stromwertes reagiert.

4. Verfahren nach einem der vorstehenden Ansprüche, wobei der Verbraucher eine Induktivität aufweist, so dass bei Zurücknehmen des Stromwertes des Verbrauchers eine Induktionsspannung generiert wird, welche das Niedervoltbordnetz zusätzlich speist.

5. Verfahren nach einem der vorstehenden Ansprüche, und wobei es sich bei dem Hochstromverbraucher um eine Getriebepumpe handelt.

6. Verfahren nach einem der vorstehenden Ansprüche, bei dem ein Steuersignal ausgewertet wird (S2), welches eine kritische Belastung des Niedervoltnetzes anzeigt und wobei der Stromverbrauch des anderen Verbrauchers zurückgenommen wird, falls das Steuersignal eine kritische Belastung des Niedervoltnetzes anzeigt.

7. Verfahren nach einem der vorstehenden Ansprüche, wobei ein Steuersignal ausgewertet wird (S1), welches über die Zuschaltung des Hochstromverbrauchers informiert.

8. Verfahren nach einem der vorstehenden Ansprüche, wobei nach Erkennen des Steuersignals, welches über die Zuschaltung des Hochstromverbrauchers informiert, der Stromverbrauch des anderen Verbrauchers maximal zurückgenommen wird (S3).

9. Steuerungsvorrichtung (1) und Kühlerlüfter für ein Kraftfahrzeug, wobei die Steuerungsvorrichtung dazu ausgelegt ist, das Verfahren nach einem der vorstehenden Ansprüche auszuführen.

## Claims

1. Method for controlling a load of a low-voltage electrical system of a motor vehicle, in which, when a connection of a high-current load is detected (S1), the current consumption of a radiator fan is reduced by an amount (S3) corresponding to the current consumption of the high-current load.

2. Method according to claim 1, wherein the load whose current value is reduced is a PWM radiator fan which is driven differentially by pulse width modulation so that the current consumption can be adjusted.

3. Method according to any one of the preceding claims, wherein the load whose current value is reduced is a load whose action reacts with inertia to a reduction in the current value.

4. Method according to any one of the preceding claims, wherein the load has an inductance so that, upon reduction of the current value of the load, an induction voltage is generated which additionally supplies the low-voltage electrical system.

5. Method according to any one of the preceding claims, and wherein the high-current load is a gear pump.

6. Method according to any one of the preceding claims, in which a control signal is evaluated (S2) which indicates a critical utilization of the low-voltage network, and wherein the current consumption of the other load is reduced if the control signal indicates a critical utilization of the low-voltage network.

7. Method according to any one of the preceding claims, wherein a control signal which informs about the connection of the high-current load is evaluated (S1).

8. Method according to any one of the preceding claims, wherein, after detecting the control signal which informs about the connection of the high-current load, the current consumption of the other load is maximally reduced (S3).

9. Control device (1) and radiator fan for a motor vehicle, wherein the control device is designed to execute the method according to any one of the preceding claims.

## Revendications

1. Procédé de commande d'un récepteur d'un réseau de bord basse tension d'un véhicule à moteur, dans lequel, lorsqu'une connexion d'un consommateur de courant de haute intensité est détectée (S1), la consommation électrique d'un ventilateur de radiateur est réduite d'une valeur (S3), laquelle correspond à la consommation électrique du consommateur de courant de haute intensité.

2. Procédé selon la revendication 1, dans lequel le récepteur, dont la valeur de courant est réduite, est un ventilateur de radiateur PWM, lequel est commandé de façon différenciée par modulation d'impulsions en largeur de telle sorte que la consommation de courant peut être réglée.

3. Procédé selon l'une quelconque des revendications précédentes, dans lequel le récepteur, dont la valeur de courant est réduite, est un récepteur dont l'action réagit par inertie à une réduction de la valeur de courant.

4. Procédé selon l'une quelconque des revendications précédentes, dans lequel le récepteur présente une inductance de telle sorte que lors de la réduction de la valeur de courant du récepteur une tension induite est générée, laquelle alimente en plus le réseau de bord basse tension.

5. Procédé selon l'une quelconque des revendications précédentes, et dans lequel le récepteur de courant de haute intensité est une pompe à engrenages.

6. Procédé selon l'une quelconque des revendications précédentes, dans lequel un signal de commande est évalué (S2), lequel indique une charge critique du réseau basse tension et dans lequel la consommation de courant de l'autre récepteur est réduite si le signal de commande indique une charge critique du réseau basse tension.

7. Procédé selon l'une quelconque des revendications précédentes, dans lequel un signal de commande est évalué (S1), lequel informe de la connexion du consommateur de courant de haute intensité.

8. Procédé selon l'une quelconque des revendications précédentes, dans lequel après la détection du signal de commande, qui informe de la connexion du consommateur de courant de haute intensité, la consommation électrique de l'autre récepteur est réduite au maximum (S3).

9. Dispositif de commande (1) et ventilateur de radiateur pour un véhicule à moteur, dans lequel le dispositif de commande est conçu pour mettre en oeuvre le procédé selon l'une quelconque des revendications précédentes.
